Europäisches Patentamt

European Patent Office

Office européen des brevets

(11) Publication number: 0 323 686
A1

# EUROPEAN PATENT APPLICATION

(21) Application number: 88300111.7

(22) Date of filing: 07.01.88

(51) Int. Cl.⁴: **A23G 3/00** , **A23G 3/20** , **A23G 3/30**

(43) Date of publication of application:
12.07.89 Bulletin 89/28

(84) Designated Contracting States:
AT BE CH DE ES FR GB GR IT LI LU NL SE

(71) Applicant: **Epiphany, Inc.**
**1831 Fanning Street**
**Los Angeles California 90026(US)**

(72) Inventor: **Gorman, Jeffrey B.**
**1831 Fanning Street**
**Los Angeles California 90026(US)**
Inventor: **Katz, Marilyn**
**1558 Sunset Plaza Drive**
**Los Angeles California 90069(US)**

(74) Representative: **Lerwill, John et al**
**A.A. Thornton & Co. Northumberland House**
**303-306 High Holborn**
**London, WC1V 7LE(GB)**

(54) Composite food product.

(57) An attractive composite, candy food product and sucker with outstanding market appeal can be readily and economically mass produced. The composite food product and sucker has a rubber-like outer shell (14) which provides a cover and wrapper for the candy and a toy for the user when the cover is removed. The composite food product can also be provided with a plug (64, 66, 68) made of bubble gum, chewing gum, food grade wax, or chocolate, to further enhance the appeal of the food product.

FIG. 2

FIG. 3

EP 0 323 686 A1

## COMPOSITE FOOD PRODUCT

### BACKGROUND OF THE INVENTION

This invention pertains to food products, and more particularly, to candy suckers.

Each year, voluminous amounts of candy suckers are sold. Suckers are well liked by people of all ages, including adults, and particularly, by babies, small children, and teenagers.

For decades, round lollipops and all-day suckers have been available in different sizes and colors in stores and amusement parks. Dual flavored suckers. such as Tootsie Roll suckers, have also been sold for a long time.

Consumers are very loyal to candy suckers and appear to be very interested in purchasing and trying new suckers, provided the suckers are attractive and reasonably priced. Some suckers, however. are not well received by customers because they are too expensive, too big, have an awkward shape, or are uncomfortable in the consumer's mouth. Some consumers don't like flat suckers with a pattern stamped or imprinted thereon which can be easily rubbed off, marred, or removed.

Many retailers do not like to stock or sell overly large suckers because they are bulky, take up excessive amounts of shelf space, and are slow sellers.

Food processors find it very difficult and expensive to manufacture, package, and sell some types of suckers.

Over the years, likenesses of fingers, feet and other anatomical parts have been depicted in candy suckers, ice cream bars, cookies, meat, toys, trophies, sculptures, wood engravings, drawings, and paintings. Typifying some of these candy suckers, ice cream bars, cookies, meat, toys, trophies. sculptures, wood engravings, drawings, and paintings are those shown in U.S. Patents 1.609,791. 1,913,851, 2,048,364, 2,190,231, Des. 31,106. Des. 69,277, Des. 92,680, Des. 161,746, Des. 201,188, Des. 230,536, Des. 255,280, Des. 256. 960. Des. 272,613, and Des. 274,859, as well as a 6 1 2 foot high plaster sculpture of a thumb formed in 1966 by Cesar Baldaccini, which was displayed at the Louisiana Museum of Modern Art at Humleback near Copenhagen and appears as item #849, at page 686, in the History of Art - (second edition 1977) by H. W. Janson, on the chapter of Twentieth Century Painting and Sculptures. along with item #851 depicting an 1844 wooden engraving of Granville, entitled "The Finger. of God." These prior art candy suckers, ice cream bars, cookies, meat, toys, trophies. sculptures, wood engravings, drawings, and paintings have met with varying degrees of success.

It is, therefore, desirable to provide an composite food product and sucker which overcomes most, if not all, of the preceding difficulties.

### SUMMARY OF THE INVENTION

An improved composite food product and candy sucker is provided which is aesthetically attractive, economical, and fun. Advantageously, the novel food product and sucker is tasty, compact, comfortable in one's mouth, and pleasing to lick as well as to suck. The composite food product and sucker has excellent market appeal and can be readily mass produced. It is easy to unwrap and use and is safe.

To this end, the novel food product comprises a candy core or main body portion, which is at least partially liquid when formulated, blended, and poured into a mold and is hardened to a rigid shape-sustaining form when cooled in and removed from the old. Desirably, the mold comprises a flexible shell made of rubber or elastomeric plastic, which provides a detachable protective cover for the hard candy. The cover can have a manually graspable flange or other grippable portions to facilitate removal of the cover.

In order to enhance market appeal and facilitate molding, a plug can be positioned next to the candy. Preferably, the plug is placed adjacent and externally of the outer surface and bottom end of the candy at the open end of the mold after the candy has been poured and set in the mold, to provide a seal which protectively covers and seals the open end of the candy and mold. The plug can be made of bubble gum, chewing gum, food grade wax, chocolate, some other flavor or type of hard candy, or other food grade materials.

The composite candy food product preferably comprises a sucker with a stick or other handle which extends from and is connected to the candy to grasp and hold the sucker while the sucker is being licked, sucked, or carried. A removable disk can be slid upon the handle and positioned against the base of the cover near the outer end of the plug to provide a seat and seal for the plug, candy, and cover. While the composite food product preferably comprises a sucker, in some circumstances it may be desirable to omit the handle.

The candy, cover, plug, handle, and disk can be of different sizes, shapes, and colors. For example, the candy and cover can be molded in the form of a pickle or other vegetable, or a banana or other fruit, or different anatomical parts. Other shapes can also be used.

In the preferred form, the mold, cover, and hard candy are generally in the shape of a thumb. The cover, when removed from the candy core, also provides a thumb-shaped toy and novelty item which can be placed upon and cover the thumb of the consumer.

While the preferred composite food product comprises hard candy, a plug and a multi-purpose elastomeric mold and cover, it may be desirable in some circumstances to use a paper or cellophane wrapper instead of the elastomeric cover or use a different type of mold.

A more detailed explanation of the invention is provided in the following description and appended claims taken in conjunction with the accompanying drawings.

## BRIEF DESCRIPTION OF THE DRAWINGS

Figure 1 is a perspective view of a thumb-shaped, composite food product in accordance with principles of the present invention;

Figure 2 is a perspective view of the thumb-shaped, composite food product with the disk and cover partially removed;

Figure 3 is a fragmentary cross-sectional view of the thumb-shaped, composite food product with a gum plug;

Figure 4 is a fragmentary cross-sectional view of the thumb-shaped, composite food product with a chocolate plug;

Figure 5 is a fragmentary cross-sectional view of the thumb-shaped, composite food product with a wax plug;

Figure 6 is a perspective view of the thumb-shaped, composite food product with the disk and cover being further removed;

Figure 7 is a perspective view of the thumb-shaped, composite food product with the disk and cover removed.

Figure 8 is a bottom view of a thumb-shaped, composite food product; and

Figure 9 is a bottom view of a thumb-shaped, composite food product with the disk removed.

## DETAILED DESCRIPTION OF THE PREFERRED EMBODIMENT

Referring to the Drawings, a thumb-shaped, composite candy food product 10 provides an attractive sucker and lollipop-type candy. The composite food product comprises a compact packaging assembly which can be readily manufactured and mass produced. While the composite candy food product preferably has the illustrated thumb-shaped configuration, it is to be understood that the novel composite food product can be molded and manufactured in other shapes, as well as in different sizes, colors, and flavors.

The composite food product and sucker has an internal candy core 12 which provides the main body portion. The candy core is in at least a partially liquified form when formulated, heated, blended, and poured into a thumb-shaped mold 14. When cooled, shipped, and removed from the mold, the candy core is solid, rigid, and hard and is in a thumb-shaped, shape-sustaining, hardened form, which can be licked, sucked, and eaten by the user (customer).

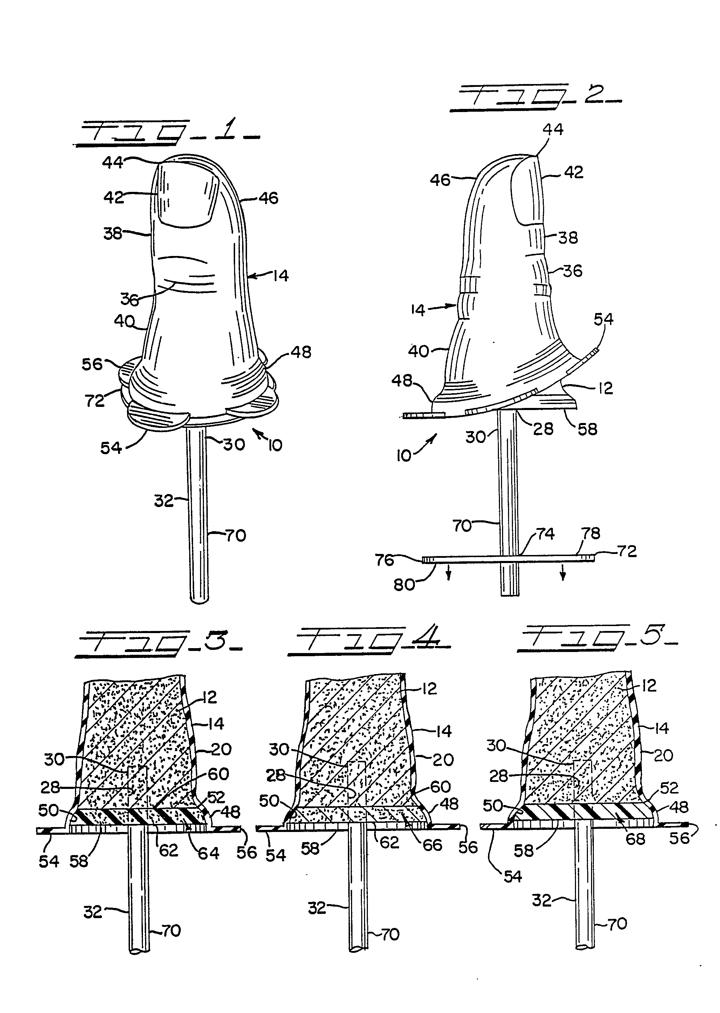

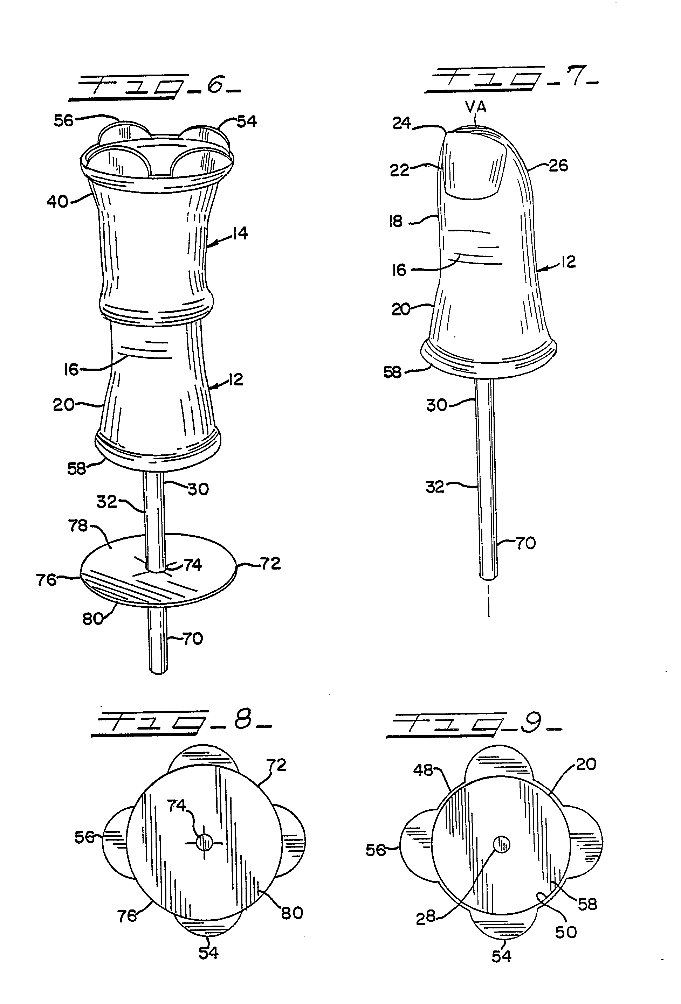

As shown in Figure 7, the hard candy core has a rigid joint-shaped portion 16, a rigid upper portion and distal phalange 18 which extends upwardly from the joint-shaped portion along the vertical axis VA of the core, and a rigid lower portion and proximal phalange 20 which extends downwardly from the joint-shaped portion along the vertical axis of the core. The upper portion of the hard candy core has a rigid finger nail-shaped portion 22 with an upper rounded rigid tip 24 which provides the top end of the core. The upper portion has a rounded, rigid convex back 26 which extends rearwardly and downwardly from the top (tip) of the core. As shown in Figures 3-5 and 9, the lower portion has a rigid bottom end with a downwardly facing, axial, hole, recessed opening, and socket 28 which snugly receives the connecting portion 30 of the stick or handle 32.

Extending snugly about the candy core, is a removable, resilient, flexible, unitary, outer shell, jacket and casing 14. The outer shell has a thumb-shaped configuration and is made of rubber or rubber-like, flexible, elastomeric plastic. The shell preferably has sufficient structural strength, elasticity, mechanical integrity, and wall thickness so than it can be readily lifted, pulled, expanded, detached, and removed from the candy core when it is desired to eat or lick the candy. The multi-purpose outer shell provides: (1) a mold to receive and mold the liquified candy form, (2) a removable outer protective cover and wrapper which is positioned about and covers the hard candy core, and (3) a toy and novelty item which can be placed upon the thumb or finger of the user when the cover is taken off and removed from the hard candy core.

As shown in Figures 1 and 2, the outer shell and cover has a flexible joint-shaped portion 36, a flexible upper portion and distal phalange 38 which extends upwardly from the flexible joint-shaped portion along the vertical axis of the composite food product, sucker, and shell, and a flexible lower portion and proximal phalange 40 which extends downwardly from the flexible joint-shaped portion of the shell along the vertical axis of the composite food product, sucker, and shell. The upper portion of the shell and cover has a flexible finger nail-shaped portion 42 with an upper rounded flexible tip 44 which provides the top end of the outer shell. The upper portion of the shell has a rounded, flexible convex back 46 which extends rearwardly and downwardly from the top and tip of the shell. The lower portion of the shell has an enlarged, open ended, diverging base 48, which provides the bottom of the shell. The base has a larger circumference and transverse cross-sectional area than other portions of the shell. The open ended base provides a plug-receiving chamber, compartment, and socket 50 (Figures 3-5) as well as and a downwardly facing, inlet access opening 52 through which the liquified candy can enter and be poured in the mold. The downwardly facing access opening also provides an outlet access opening through which the hard candy core can be pulled and removed from the cover.

In order to facilitate manual lifting and removal of the outer shell and cover from the candy core, the cover has a set of symmetrical arcuate, flexible rounded lobes or ears 54 which extend radially outwardly from the base of the shell. The lobes are circumferentially spaced apart from each other and provide manually grippable flange portions and sections which can be readily grasped and gripped. As best shown in Figure 9, in the illustrative embodiment, there are four identical lobes; each of said lobes has an arcuate outer edge 56 which extends at least 180 degrees but less than 270 degrees to facilitate gripping. While the illustrated four lobes are preferred for enhanced effectiveness, in some circumstances it may be desirable to use more or fewer lobes or different shaped lobes, or a continuous annular flange.

In order to enhance the appeal and flavor of the composite food product and the molding and removal of the candy core, a plug 58 (Figures 3-5) is positioned in the plug-receiving chamber and compartment of the base adjacent the bottom of the shell. The plug abuts against the downwardly facing bottom surface of the candy core and serves as a cap and seal to plug up and seal the open end of the mold and cover. The plug can be poured in semi-liquid form into the plug-receiving chamber of the mold after the liquified candy core has set and cooled. The plug matingly engages and conforms to the inwardly facing wall portions of the base comprising the plug-receiving chamber.

The circular, upper flat surface 60 of the plug lies flush against the bottom of the candy core and is slightly smaller the the circular, bottom flat surface 62 of the plug. Desirably, the plug is made of a food grade material, such as bubble gum,, chewing gum, chocolate, or chewable, food grade wax. Figure 3 illustrates a gum plug 64. Figure 4 illustrates a chocolate plug 66. Figure 5 illustrates a wax plug 68. While gum, chocolate, and wax are the preferred plugs, in some circumstances it may be desirable to use plugs made of other types or flavors of hard or soft candy, or other food grade materials, or inedible materials.

The sucker has a handle 32 to hold the sucker when it is being carried, licked, sucked and eaten. The handle has a connecting portion 30 fused, molded or otherwise connected to the plug and the candy core. The connecting portion of the handle is inserted and snugly positioned in an interference fit in the plug-receiving opening and hole of the candy core. The handle has a manually grippable handle portion 70 which extends downwardly from the connecting portion of the handle along the vertical axis of the composite food product. The handle can be made of wood, paperboard, or plastic. In the preferred embodiment, the handle comprise an elongated cylindrical stick or rod. While a stick or rod type handle is preferred for economy, compactness, and ease of storage and shipment, other shaped handles can be used, if desired.

A flat or planar annular circular disk 72 (Figures 1,2, 6, and 8) removably seats and abuts against and engages the base and lobes of the cover near the plug. The disk has a central axial hole, opening and passageway 74 which slides upon and receives the manually grippable portion of the handle. The disk has a circular outer edge 76 that has a maximum span, diameter and circumference which is larger than the access opening and open end of the base of the shell (cover) to provide a removable closure member and seal which substantially closes the access opening and open end of the base and seals the plug and candy core within the shell. The disk's maximum span, diameter, and circumference is preferably less than the corresponding maximum span, diameter, and circumference of the outermost edges and tips (ends) of the lobes to minimize obstruction and blockage by the disk which could interfere with gripping the manually graspable lobes and flange portions. The top and bottom surfaces 78 and 80 of the disk are generally flat or planar. The upwardly facing top surface 78 lies flush against and engages the downwardly facing surfaces of the lobes and the bottom edge of the base of the mold and cover. The downwardly facing bottom surface 80 can have illustrations, designs, instructions, or other indicia imprinted thereon. The disk can be made of paper, paperboard, or plastic. In the illustrative embodiment, the disk is spaced below the plug, although in some circumstances it may be desirable that the disk be placed flush against the plug.

In order to lick, suck, taste, and eat the candy core and plug of the composite food product and sucker, the disk and cover are removed as shown in Figures 2 and 6. During removal, the cover may have a tendency to temporarily stick slighty to the candy so that the cover turns inside out and is inverted when removed. After removal, the cover can be turned rightside out and be placed upon the user's own thumb as a toy or novelty item.

Among the many advantages of the composite candy food product and sucker are:

1. Superior market appeal.
2. Economical.
3. Cost effective.
4. Compact.
5. Safe.
6. Easy to use and unwrap.
7. Interesting.
8. Fun.
9. Aesthetically pleasing.
10. Delicious.
11. Tasty.
12. Attractive.

Although embodiments of the invention have been shown and described, it is to be understood that various modifications and substitutions, as well as rearrangements of parts, can be made by those skilled in the art without departing from the novel spirit and scope of this invention.

## Claims

1. A composite food product, comprising:
hard candy comprising a first food grade material, said hard candy having a lower portion with a bottom end; and
a cap abuttingly engaging and positioned against said bottom end of said hard candy, said cap comprising a second food grade material selected from the group consisting of bubble gum, or chewing gum.

2. A composite food product in accordance with claim 1 including:
a seal positioned adjacent said cap;
a handle having a connecting portion extending substantially through and connected to said cap and extending into and connected to said lower portion of said hard candy, said handle extending through said seal and having a manually grippable portion extending below said hard candy and cap;
a removable resilient cover positioned about said hardened candy and said cap, said resilient cover being of a material selected from the group consisting of rubber or plastic, said cover having a base and finger gripping flange portions extending radially outwardly of said base, said finger gripping flange portions being positioned against and in substantially sealing engagement with said seal, and said finger gripping flange portions extending radially outwardly of said seal to facilitate gripping of said flange portions and removal of said cover.

3. A composite food product, comprising:
a handle comprising a stick;
candy attached to said handle, said candy being in at least a partially liquified form when formulated and being in a substantially hardened shape-sustaining form when cooled and attached to said handle; and
a detachable candy-engageable elastomeric mold for receiving said candy in liquified form to form the shape of said hardened candy and providing a manually detachable elastomeric cover for said hardened candy form, said detachable candy-engageable mold comprising an elastomeric material selected from the group consisting of rubber or flexible plastic, said detachable candy-engageable mold extending above said handle, said elastomeric cover having a base and manually grippable flange portions, said manually grippable flange portions comprising arcuate ears extending radially outwardly from said base in a direction radially outwardly from said handle, said ears comprising flexible rounded lobes, said lobes being circumferentially spaced from each other to facilitate gripping and removal of said detachable elastomeric cover from said hardened candy, and each of said lobes having an arcuate outer edge extending from about 180 degrees to less than about 270 degrees.

4. A composite food product in accordance with claim 3 including a seal comprising a substantially circular disk positioned about said handle adjacent said ears, said disk having a maximum diameter less than the maximum span between said ears to substantially minimize blockage of said ears, and said ears extending radially outwardly of said disk to facilitate gripping of said ears and removal of said cover from said hardened candy.

5. A composite food product in accordance with claim 3 including a cap positioned between said seal and said hardened candy at a location adjacent said base and radially inwardly of said ears, said cap comprising food grade material selected from the group consisting of gum, candy, chocolate, or chewable food grade wax, and said cap connected to said handle.

6. A composite food product, comprising:
a handle having a connecting portion;
candy securely connected to and extending above said connecting portion of said handle, said candy being in at least a partially liquified form when formulated and being in a substantially hardened shape-sustaining form when cooled and attached to said handle; and

a removable elastomeric mold having an inner candy-engageable surface for receiving said candy in liquified form to form the shape of said hardened candy and providing a manually detachable elastomeric cover for said hardened candy form, said detachable cover comprising an elastomeric material selected from the group consisting of rubber or flexible plastic, said detachable cover extending above said handle, said elastomeric cover having a base and manually grippable flange means extending radially outwardly from said base in a direction radially outwardly from said handle to facilitate gripping and removal of said detachable cover from said hardened candy; and

a seal comprising a substantially circular disk positioned about said handle adjacent said flange means, said disk having a maximum diameter less than the maximum diametric span of said flange means to enhance access to said flange means; and

said flange means extending outwardly of said disk to facilitate gripping of said flange means and removal of said detachable cover from said hardened candy.

7. A composite food product in accordance with claim 6 including a plug comprising food grade material selected from the group consisting of chewing gum, chocolate, or wax, said plug being positioned between said disk and said hardened candy at a liquified adjacent said base and radially inwardly of said flange means, said plug being annularly surrounded by said cover and connected to said connection portion of said handle.

8. A composite food product, comprising:

a candy core, said candy core being in a generally liquified form when poured into a mold and in a substantially thumb-shaped hardened form when cooled and removed from said mold;

said thumb-shaped hardened form comprising said candy core positioned along a vertical axis and comprising a rigid joint-shaped portion, a rigid upper portion extending upwardly from said rigid joint-shaped portion along said vertical axis, and a rigid lower portion extending downwardly from said rigid joint-shaped portion along said vertical axis, said upper portion having a rigid finger nail-shaped portion with an upper rigid tip providing a rigid top end of said thumb-shaped hardened form and a rigid convex back extending rearwardly and downwardly from said rigid tip, and said rigid lower portion having a rigid bottom end and defining a recessed opening comprising a handle-receiving socket about said vertical axis;

a removable resilient shell comprising a substantially thumb-shaped, elastomeric material selected from the group consisting of rubber or flexible plastic, said shell providing

a mold for receiving and molding said liquified candy form,

a removable outer protective cover positioned about and covering said hardened form comprising said candy core, and

a toy and novelty item for placement upon the thumb of the user when removed from said hardened form comprising said candy core;

said thumb-shaped elastomeric material comprising said removable resilient shell comprising a flexible joint-shaped portion, a flexible upper portion extending upwardly from said flexible joint-shaped portion along said vertical axis, and a flexible lower portion extending downwardly from said flexible joint-shaped portion along said vertical axis, said upper portion having a flexible finger nail-shaped portion with an upper flexible tip providing a flexible top end of said shell and a flexible convex back extending rearwardly and downwardly from said flexible tip, and said flexible lower portion having an enlarged open ended diverging base, said base having a larger circumference and transverse cross-sectional area than other portions of said shell and providing the bottom of said shell, said open ended base defining a plug-receiving chamber and an access opening for entrance of said liquified form and discharge of said hardened candy form, and a set of substantially symmetrical arcuate lobes extending radially outwardly from said base, said lobes being circumferentially spaced from each other and providing manually grippable flange portions to facilitate manual removal of said shell from said core;

a plug positioned in said plug-receiving chamber adjacent said bottom of said shell, said plug abutting against the bottom of said core and providing a cap for substantially plugging and sealing the open end of said mold and cover to help enclose said candy core, and said plug comprising a food grade material selected from the group consisting of chewing gum, chocolate, or food grade wax;

a handle having a connecting portion connected to said plug and said candy core and positioned in said plug-receiving opening and having a manually grippable handle portion extending downward from said connecting portion along said vertical axis; and

a substantially planar annular disk for abuttingly engaging and removably seating against said base and said lobes adjacent said plug, said disk defining a central axial hole for slidably receiving said handle portion and having an outer edge with a maximum span larger than said access opening but less than the maximum diameter of said symmetrical set of lobes to substantially minimize interference with manually gripping of said manual grippable flange portions of said lobes, said disk being of a material selected from the group consisting of paper, paperboard, or plastic, and providing a removable closure member and seal for substantially closing said access opening and sealing said plug and said candy core within said shell.

9. A composite food product in accordance with claim 8 wherein said lobes comprise four ears, and each of said ears have an arcuate outer edge extending at least 180 degrees but less than 270 degrees.

10. A composite food product in accordance with claim 8 wherein: said disk is substantially circular and has a top surface positioned positioned adjacent said lobes and a bottom surface with indicia thereon; and said handle comprise an elongated cylindrical stick comprising a semi-rigid material selected from the group consisting of wood, paperboard, or plastic.

FIG_1_

FIG_2_

FIG_3_

FIG_4

FIG_5_

_FIG_-6-

_FIG_-7-

_FIG_-8-

_FIG_-9-

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X | FR-A-2 505 614 (G.TOWAE)<br>* Page 1, lines 5-9; figure 7 *<br>--- | 1 | A 23 G 3/00<br>A 23 G 3/20<br>A 23 G 3/30 |
| Y | US-A-3 062 662 (B.McDONALD)<br>* Column 1, lines 7-8; figures 1-3 *<br>--- | 1 | |
| Y | US-A-4 514 423 (S.TEZUKA et al.)<br>* Figures 1-3; column 3, lines 1-10;<br>example; column 4, lines 29-33 *<br>--- | 1 | |
| A,D | US-A-2 190 231 (F.L.CRADDOCK)<br>* Figures 1-6; pages 1,2 *<br>--- | 8 | |
| A | GB-A- 533 502 (O.J.KUHLKE)<br>* Page 2, lines 94-109; figures 1-7;<br>page 1, lines 35-49 *<br>--- | 2,3,4,5,9 | |
| A | FR-A-2 265 283 (UNILEVER)<br>* Figures 1,2; page 1, line 25 - page<br>2, line 11; claims 1,2 *<br>--- | 2,3,6,8 | |
| A | BE-A- 505 752 (L.P.S.DJIAN et al.)<br>* Figures 9,10,13,15; page 1, lines<br>1-3; claim 1; page 5, lines 48-49; page<br>6, lines 1-5 *<br>--- | 2 | **TECHNICAL FIELDS SEARCHED (Int. Cl.4)**<br><br>A 23 G |
| A | DE-A-3 342 069 (J.MANFRED)<br>* Figures 1-3; claims 1-4 *<br>--- | 2 | |
| A | FR-A- 793 980 (G.A.GUERIN)<br>--- | | |
| A | FR-A-2 491 731 (S.M.CONCETTA)<br>--- | | |
| A | CH-A- 610 746 (E. DE LA CRUZ HERRANZ)<br>* Figures 1,2; pages 1,2 *<br>--- | 2,4 | |
| A | US-A-2 628 169 (J.G.BERTHOLD)<br>---                    -/- | | |

The present search report has been drawn up for all claims

| Place of search | Date of completion of the search | Examiner |
|---|---|---|
| THE HAGUE | 06-07-1988 | GUYON R.H. |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons
...........................................................
& : member of the same patent family, corresponding
    document

EPO FORM 1503 03.82 (P0401)

**European Patent Office**

# EUROPEAN SEARCH REPORT

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| A | US-A-2 156 482 (J.F.ROBB) --- | | |
| A | US-A-2 243 375 (G.A.ELLESTAD) --- | | |
| A | GB-A-1 573 912 (W.NEVIL JOHNSON) --- | | |
| A | EP-A-0 220 898 (K.SHIGEO et al.) ----- | | |

TECHNICAL FIELDS
SEARCHED (Int. Cl.4)

The present search report has been drawn up for all claims

| Place of search | Date of completion of the search | Examiner |
|---|---|---|
| THE HAGUE | 06-07-1988 | GUYON R.H. |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P0401)